(19)

**Europäisches Patentamt**

**European Patent Office**

**Office européen des brevets**

(11) **EP 4 723 022 A1**

(12) **EUROPEAN PATENT APPLICATION**

(43) Date of publication:
08.04.2026 Bulletin 2026/15

(21) Application number: 25203668.6

(22) Date of filing: **22.09.2025**

(51) International Patent Classification (IPC):
*G06Q 50/06* (2024.01)     *G06N 20/00* (2019.01)
*H02J 3/00* (2026.01)     *H04L 9/00* (2022.01)

(52) Cooperative Patent Classification (CPC):
**G06Q 50/06; G06N 3/044; G06N 3/045; G06N 3/08;
G06N 3/084; G06N 3/088; G06N 5/01; G06N 7/01;
G06N 20/00; G06N 20/10; G06N 20/20;
H02J 3/003; H04L 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024  FI 20246173**

(71) Applicant: **Nokia Solutions and Networks Oy
02610 Espoo (FI)**

(72) Inventors:
• **RAMANAN, Buvaneswari
Scotch Plains, NJ (US)**

• **KHAN, Manzoor
New Providence, NJ (US)**
• **GUDAL, Aditya
Springfield, NJ (US)**
• **SIENEL, Juergen
Leonberg (DE)**
• **A C, Senthil Muthu Kumar
c/o Nokia Solutions and Networks India,
Bangalore (IN)**

(74) Representative: **Nokia EPO representatives
Nokia Technologies Oy
Karakaari 7
02610 Espoo (FI)**

(54) **METHOD AND APPARATUS FOR ENERGY MANAGEMENT**

(57) Examples of the disclosure relate to obtaining data from a smart energy sensor connected to at least one of: an energy generating device, an energy consuming entity; and an energy storage device within a household; determining a feature vector based on the obtained data, wherein, the feature vector comprises information related to at least one of: energy generation, energy consumption, energy surplus at the household; determining an embedding based on the feature vector, wherein the embedding is suitable for a comparison across a plurality of households for clustering the households.

EP 4 723 022 A1

## Description

<u>Field of the invention</u>

Various example embodiments relate to energy management, specifically to energy management of renewable energy.

<u>Background</u>

IN202011009703A discloses a method for predicting energy consumption demand and energy generation for power trading. The method involves a Smart Energy Manager gateway (SEM gateway) that collects data at customer premises from various devices such as energy meter, battery storage, various power consumption loads of a consumer, etc. The SEM gateway at customer premises connects with a Smart energy manager cloud (SEM Cloud, which is an intelligent electric energy trading platform). The SEM cloud platform predicts demand forecast of consumer and automatically submits bids for power purchase through exchange.

However, in the above disclosure, all the information collected at customer premises are provided to the SEM cloud platform. The privacy of the users cannot be protected.

Federated learning is used for the purpose of guaranteeing the privacy of sensitive data.

However, in energy management systems, the global data often exhibit non-IID (non-Independent and Identically Distributed) characteristics, meaning the data distributions vary greatly between different clients due to diverse environmental conditions and energy usage behaviors. This variation can undermine the performance of traditional federated learning approaches, which assume that the data across clients are IID.

There is thus a need for an improved method and apparatus to solve the aforementioned problems.

<u>Summary of the Invention</u>

The invention is set out in the appended set of claims.

According to a first aspect of the invention, there is provided an apparatus comprising means for obtaining data from a smart energy sensor connected to at least one of: an energy generating device, an energy consuming entity; and an energy storage device within a household; determining a feature vector based on the obtained data, wherein, the feature vector comprises information related to at least one of: energy generation, energy consumption, energy surplus at the household; determining an embedding based on the feature vector, wherein the embedding is suitable for a comparison across a plurality of households for clustering the households; providing the embedding to a first output of the apparatus; receiving, from a first input of the apparatus, information related to a machine learning model for a cluster to which the apparatus is assigned; wherein, the cluster is assigned based on the embedding; determining a first set of gradients by training the machine learning model based on the feature vector; providing the first set of gradients to the first output of the apparatus; receiving, from the first input of the apparatus, a trained machine learning model, wherein, the trained machine learning model is trained base on the first set of gradients; predicting, using the trained machine learning model, at least one of: the energy generation, energy consumption, and energy surplus; or disaggregating, using the trained machine learning model, an overall consumption to individual consumptions of a plurality of energy consuming entities within the household; providing a result of the predicting or the disaggregating to a second output of the apparatus.

According to a second aspect of the invention, there is provided a method comprising: obtaining data from a smart energy sensor connected to at least one of: an energy generating device, an energy consuming entity; and an energy storage device within a household; determining a feature vector based on the obtained data, wherein, the feature vector comprises information related to at least one of: energy generation, energy consumption, energy surplus at the household; determining an embedding based on the feature vector, wherein the embedding is suitable for a comparison across a plurality of households for clustering the households; providing the embedding to a first output of the apparatus; receiving, from a first input of the apparatus, information related to a machine learning model for a cluster to which the apparatus is assigned; wherein, the cluster is assigned based on the embedding; determining a first set of gradients by training the machine learning model based on the feature vector; providing the first set of gradients to the first output of the apparatus; receiving, from the first input of the apparatus, a trained machine learning model, wherein, the trained machine learning model is trained base on the first set of gradients; predicting, using the trained machine learning model, at least one of: the energy generation, energy consumption, and energy surplus; or disaggregating, using the trained machine learning model, an overall consumption to individual consumptions of a plurality of energy consuming entities within the household; providing a result of the predicting or the disaggregating to a second output of the apparatus.

According to a third aspect of the invention, there is provided a computer program comprising instructions for causing an apparatus to perform at least the following: obtaining data from a smart energy sensor connected to at least one of: an energy generating device, an energy consuming entity; and an energy storage device within a household; determining a feature vector based on the obtained data, wherein, the feature vector comprises information related to at least one of: energy generation, energy consumption, energy surplus at the household; determining an embedding based on the feature vector, wherein the embedding is suitable for a comparison across a plurality of households for clustering the households; providing the embedding to a first output of the apparatus; receiving, from a first input of the apparatus, information related to a machine learning model for a cluster to which the apparatus is assigned; wherein, the cluster is assigned based on the embedding; determining a first set of gradients by training the machine learning model based on the feature vector; providing the first set of gradients to the first output of the apparatus; receiving, from the first input of the apparatus, a trained machine learning model, wherein, the trained machine learning model is trained base on the first set of gradients; predicting, using the trained machine learning model, at least one of: the energy generation, energy consumption, and energy surplus; or disaggregating, using the trained machine learning model, an overall consumption to individual consumptions of a plurality of energy consuming entities within the household; providing a result of the predicting or the disaggregating to a second output of the apparatus.

According to a fourth aspect of the invention, there is provided an apparatus comprising at least one processor and at least one memory including computer program code, the at least one memory and the computer program code configured to with the at least one processor, cause the apparatus at least to perform: obtaining data from a smart energy sensor connected to at least one of: an energy generating device, an energy consuming entity; and an energy storage device within a household; determining a feature vector based on the obtained data, wherein, the feature vector comprises information related to at least one of: energy generation, energy consumption, energy surplus at the household; determining an embedding based on the feature vector, wherein the embedding is suitable for a comparison across a plurality of households for clustering the households; providing the embedding to a first output of the apparatus; receiving, from a first input of the apparatus, information related to a machine learning model for a cluster to which the apparatus is assigned; wherein, the cluster is assigned based on the embedding; determining a first set of gradients by training the machine learning model based on the feature vector; providing the first set of gradients to the first output of the apparatus; receiving, from the first input of the apparatus, a trained machine learning model, wherein, the trained machine learning model is trained base on the first set of gradients; predicting, using the trained machine learning model, at least one of: the energy generation, energy consumption, and energy surplus; or disaggregating, using the trained machine learning model, an overall consumption to individual consumptions of a plurality of energy consuming entities within the household; providing a result of the predicting or the disaggregating to a second output of the apparatus.

According to a fifth aspect of the invention, there is provided a non-transitory computer readable medium comprising program instructions for causing an apparatus to perform at least the following: obtaining data from a smart energy sensor connected to at least one of: an energy generating device, an energy consuming entity; and an energy storage device within a household; determining a feature vector based on the obtained data, wherein, the feature vector comprises information related to at least one of: energy generation, energy consumption, energy surplus at the household; determining an embedding based on the feature vector, wherein the embedding is suitable for a comparison across a plurality of households for clustering the households; providing the embedding to a first output of the apparatus; receiving, from a first input of the apparatus, information related to a machine learning model for a cluster to which the apparatus is assigned; wherein, the cluster is assigned based on the embedding; determining a first set of gradients by training the machine learning model based on the feature vector; providing the first set of gradients to the first output of the apparatus; receiving, from the first input of the apparatus, a trained machine learning model, wherein, the trained machine learning model is trained base on the first set of gradients; predicting, using the trained machine learning model, at least one of: the energy generation, energy consumption, and energy surplus; or disaggregating, using the trained machine learning model, an overall consumption to individual consumptions of a plurality of energy consuming entities within the household; providing a result of the predicting or the disaggregating to a second output of the apparatus.

According to a sixth aspect of the invention, there is provided a computer readable medium comprising program instructions for causing an apparatus to perform at least the following: obtaining data from a smart energy sensor connected to at least one of: an energy generating device, an energy consuming entity; and an energy storage device within a household; determining a feature vector based on the obtained data, wherein, the feature vector comprises information related to at least one of: energy generation, energy consumption, energy surplus at the household; determining an embedding based on the feature vector, wherein the embedding is suitable for a comparison across a plurality of households for clustering the households; providing the embedding to a first output of the apparatus; receiving, from a first input of the apparatus, information related to a machine learning model for a cluster to which the apparatus is assigned; wherein, the cluster is assigned based on the embedding; determining a first set of gradients by training the machine learning model based on the feature vector; providing the first set of gradients to the first output of the apparatus; receiving, from the first input of the apparatus, a trained machine learning model, wherein, the trained machine learning model is trained base on the first set of gradients; predicting, using the trained machine learning model, at least one of: the energy generation, energy consumption, and energy surplus; or disaggregating, using the trained machine learning model, an overall consumption to individual consumptions of a plurality of energy consuming entities within the household; providing a result of the predicting or the disaggregating to a second output of the apparatus.

According to the example embodiments, by creating clusters of households based on energy related features, the models within each cluster can be tailored to more homogenous data distributions. For example, clients with similar solar irradiance patterns, geographical locations, and load patterns can share a model that is optimized for their specific conditions, leading to more precise predictions of energy production and consumption. This clustered approach ensures that the federated learning process accommodates the inherent heterogeneity of the data, resulting in models that are more robust and accurate. In the context of an energy management system, this is particularly important as it allows for more reliable forecasting, improved load balancing, and efficient energy trading, ultimately enhancing the stability and efficiency of the energy grid.

Brief description of the figures

For a more complete understanding of example embodiments of the present invention, reference is now made to the following descriptions taken in connection with the accompanying drawings in which:

Figure 1 shows a topology of an energy management system 100 according to various embodiments;

Figure 2 shows an example flow diagram according to various embodiments;

Figure 3 shows an example flow diagram of the federated training of the embedding generation model according to one example;

Figure 4 shows an example flow diagram of the clustering of the households according to one example embodiment;

Figure 5 show an example flow diagram of the federated training of the machine learning model according to one example;

Figure 6 shows a block diagram depicting the apparatus 200 operating in accordance with an example embodiment.

Same or similar reference numerals refer to same or similar parts or components.

Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

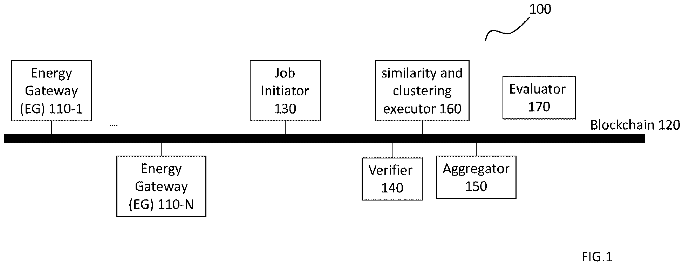

Figure 1 shows a topology of an energy management system 100 according to various embodiments.

As shown in Figure 1, the energy management system 100 comprises a plurality of energy gateways 110-1, ..., 110-N, a job initiator 130, a verifier 140, an aggregator 150, a similarity & clustering executor 160 and an evaluator 170, respectively connected to a blockchain 120. A skilled person should understand, the energy management system 100 may comprise more or less participants than those shown in Figure 1. The energy gateways 110-1, ..., 110-N may also be referred to as clients in the disclosure.

An apparatus 200 operating in accordance with an example embodiment may be used by any of the energy gateways 110-1, ..., 110-N. In one example, the apparatus 200 may be implemented in any of the energy gateways 110-1, ..., 110-N, for example as a function block of the gateway. In another example, the apparatus 200 may be implemented outside the energy gateways 110-1, ..., 110-N, and communicatively connected to the respective gateway, for example, as a plug in or a USB stick. In the following, the function of the apparatus 200 may be described as the function of the energy gateways 110-1, ..., 110-N.

Specifically, the energy gateways 110-1, ..., 110-N may be implemented at household level. The household is not limited to a family, but may also comprise a commercial building, a factory, a shop, and an office, etc. The energy gateways 110-1, ..., 110-N are configured to obtain data from one or more smart energy sensors (not shown) within the household. The communicative connection between the sensors and energy gateways 110-1, ..., 110-N may be wired or and/or wireless.

The smart energy sensors may be wired or wireless connected to at least one of: an energy generating device, an energy consuming entity; and an energy storage device within the household, etc.

The energy generating device may be a device generating electrical power from renewable energy, for example, a solar panel, a photovoltaic device, and wind turbines, etc. In the following, the energy generating device may be described as a solar panel. The energy generated by the energy generating device may be provided to a plurality of energy consuming entity within the household and/or stored in the energy storage device.

The energy generating device also be configured to provide surplus electrical energy to the electric grid.

The energy consuming entity may be at least one of: a charging station for an electrical vehicle, EV, a heat pump, a machine in the factory, and a household appliance such like refrigerator, TV, washing machine, dishwasher, and lights within the household, etc. The energy storage device may be a battery or the like configured to store surplus electrical energy generated by the energy generating device.

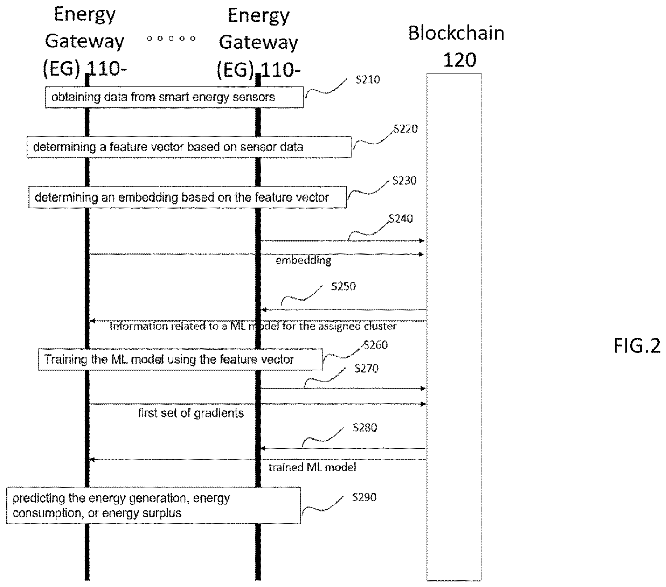

Figure 2 shows an example flow diagram according to various embodiments.

As shown in Figure 2, in step S210, the energy gateways 110-1, 110-N obtain data from one or more smart energy sensors within the household. In one example, any one of the smart energy sensors may provide, to the energy gateways 110-1, ..., 110-N, readings of voltage on and/or current flowing through the entity to which the sensor is connected.

In step S220, the energy gateways 110-1, 110-N determine a feature vector based on the obtained data, wherein, the feature vector comprises information related to at least one of energy generation, energy consumption, energy surplus at the household.

Specifically, the feature vector may vary according to the type and/or usage of the machine learning (ML) model as will be explained later. Generally, the information comprised in the feature vector may be related to the machine learning model.

In one example, the energy gateways 110-1, ..., 110-N may be configured to store the data from smart energy sensors. For example, the readings from the sensors may be respectively stored with a time stamp corresponding to each reading.

The energy gateways 110-1, ..., 110-N may be configured to determine at least one of statistics of historic consumption; statistics of historic energy production, and statistics of historic energy storage based on the stored data; and to determine the feature vector based on the statistics.

Specifically, the statistics of historic consumption may comprise average, peak, and minimum of power usage; historic data of voltage and current measurements, harmonic content of the electrical signals and ratio of real power to apparent power, indicating the efficiency of power usage, and measures of variability in consumption such as standard deviation, variance etc. Statistics of historic energy production may be a time series of energy generated by the solar panels, typically measured in kilowatt-hours (kWh) or watt-hours (Wh) over specific intervals (e.g., hourly, daily). It may also be for example minimum, maximum, and average of the energy produced per day, per week, per month, etc. during each of the 12 months of the year.

In one example, the energy gateways 110-1, ..., 110-N may be configured to obtain at least one of: characteristics of the energy generating device; characteristics of the energy consuming entities; data from an energy metering device within the household; information about the household and/or building of the household; information about environment; and temporal information. In one example, the above indicated information may be obtained via a corresponding interface.

In one example, the energy gateways 110-1, ..., 110-N may be configured to determine the feature vector further based on at least one of the above indicated information.

Specifically, the feature vector may comprise for example:

- Neighbourhood information in the form of latitude and longitude (could be a verified information as detailed in a related patent from our department);
- Number of people in the household;
- Energy Trading Activity: Participation in energy trading networks, including frequency of trading, volume of energy traded, and preferred trading partners;
- Reputation Score: The reputation score can be from the previous federated learning activities or from the previous decentralized energy trading activities. This score reflects the client's reliability and trustworthiness in contributing to model updates or trading, based on factors such as the quality of their data, their consistency in participation, and their adherence to protocol guidelines;
- Energy Storage Capacity: Information about the household's energy storage systems, such as battery capacity and usage patterns;
- Grid Interaction History: Historical data on the household's interactions with the energy grid, including instances of demand response participation, grid support activities, or energy export to the grid;
- Peak Load Contribution: Data on how the household contributes to peak loads, including any measures taken to reduce or shift load during peak periods.

In step S230, the energy gateways 110-1, ..., 110-N determine an embedding based on the feature vector, wherein the embedding is suitable for a comparison across a plurality of households for clustering the households.

In order to ensure IID Distributed characteristics of the data across clients in Federated learning, the households are clustered before federated learning could be applied to each cluster in various embodiments. Embeddings are determined for the purpose of clustering.

The embedding may be determined in various ways. For example, the embedding may be an encoded or a compressed version of the feature vector.

In one example, an embedding generation model may be used to determine the embedding. The embedding generation model may be a machine learning model that transforms high-dimensional feature vectors into a lower-dimensional space while preserving the essential characteristics of the data. It learns to represent complex features, like energy consumption patterns or environmental factors, as dense, continuous vectors that capture similarities and relationships between different data points.

The embedding generation model may be predetermined in various ways and provided to the energy gateways 110-1, ..., 110-N.

In one example, the energy gateways 110-1, 110-N may be configured to obtain a federated trained embedding generation model; and to determine the embedding based on the feature vector using the federated trained embedding generation model.

In one example, the federated trained embedding generation model may be predetermined in various ways for example based on big data and provided to the energy gateways 110-1, ..., 110-N.

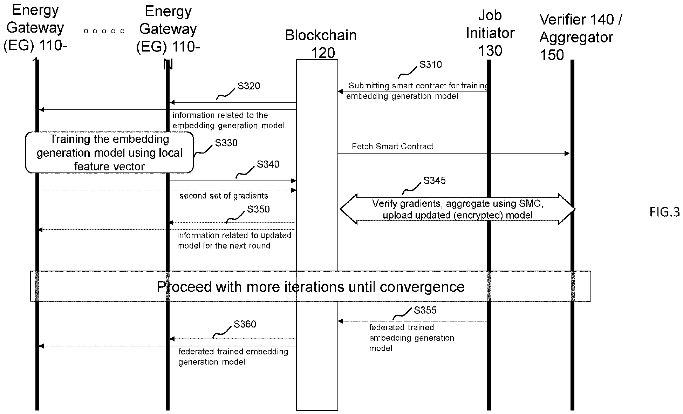

Figure 3 shows an example flow diagram of the federated training of the embedding generation model according to one example.

For simplicity, in Figure 3, the verifier 140 and the aggregator 150 are drawn together.

As shown in Figure 3, in step S310, the job initiator 130 may submit a smart contract for training the embedding generation model to the blockchain 120.

Specifically, this contract may define the rules and functionalities for the entire system, including: data submission & verification; and training of the embedding generation model.

In one example, the job initiator 130, may also act as the aggregator, and may initializes the contract with the following hyperparameters:

- feature engineering: The initiator defines the features to be extracted from the raw data, including any transformations or combinations.
- normalization: The initiator specifies the method for normalizing the feature data (e.g., min-max scaling, standardization).
- embedding generation model: The initiator selects the embedding generation model type (PCA, t-SNE, Autoencoder, etc.) and its initial parameters. PCA is a linear technique that transforms data into orthogonal components capturing the maximum variance. t-SNE is a non-linear method for dimensionality reduction while preserving local data structure. Autoencoders are neural networks that learn to compress and reconstruct data, capturing essential features.
- training parameters: The initiator sets the training epochs, batch size, learning rate, and other relevant hyperparameters.
- privacy parameters: The initiator defines the level of differential privacy (noise level) to be applied to the data.

Further in step S320, the energy gateways 110-1, ..., 110-N may respectively receive information related to an embedding generation model from a second input of the respective energy gateway 110-1, ..., 110-N.

Specifically, the information related to the embedding generation model comprises: an architecture of the embedding generation model; initial states of the embedding generation model; and hyperparameters of a training process related to the embedding generation model.

In step S330, the energy gateways 110-1, ..., 110-N may respectively determine a second set of gradients by training the embedding generation model using the local feature vector. Specifically, in one example the energy gateways 110-1, ..., 110-N may pre-process their local feature vector according to the received hyperparameters.

In step S340, the energy gateways 110-1, ..., 110-N may respectively provide their second set of gradients to a third output of the respective energy gateway 110-1, ..., 110-N.

Optionally, the second set of gradients may be encrypted before being provided to the third output. The encrypting may be performed using Homomorphic Encryption, HE, or Secure Multiparty computation, SMPC, etc. Homomorphic encryption allows computations on encrypted data without decryption, preserving privacy throughout the training process.

In step S345, the verifier 140 may verify the second set of gradients, ensuring that the data adheres to the defined format and features; that the encryption is valid and adheres to the chosen protocol; and that the submission comes from a registered and authorized household.

The smart contract may manage the training process of the embedding generation model using a decentralized approach.

Further in step S345, the aggregator 150 may aggregate the verified second set of gradients from multiple households, employing secure multi-party computation (SMC) protocols. This allows for secure aggregation without revealing individual data. The aggregator 150 may upload an updated embedding generation model for the next round training to the blockchain 120.

In step S350, the energy gateways 110-1, ..., 110-N may respectively receive information related to the updated embedding generation model from the second input of the respective energy gateway 110-1, ..., 110-N.

The energy gateways 110-1, 110-N may repeat steps S320-S350, so that the training process of may be repeated continues until a predefined termination condition is met. In one example, the predefined termination condition may be related to convergence. Specifically, the model reaches a stable state, indicated by minimal change in loss or accuracy metrics over consecutive epochs. In another example, the predefined termination condition may be related to epoch Limit. Specifically, the training process reaches the maximum number of epochs defined by the initiator.

After the training process is terminated, the job initiator may upload the federated trained embedding generation model to the blockchain 120 in step S355.

Optionally, the federated trained embedding generation model may be encrypted.

In step S360, the energy gateways 110-1, 110-N may receive the federated trained embedding generation model from the second input of the respective energy gateway 110-1, 110-N.

In the example shown in Figure 3, the second input and the third output of the energy gateways 110-1, ..., 110-N are communicatively connected to the blockchain 120. In another example, the second input and the third output may be connected to other entities such as a central server or a decentralized platform.

Reference is made back to Figure 2, in order to preserve privacy of users' data, the embedding determined in step S230 may be optionally encrypted. The encrypting may be performed using Homomorphic Encryption, HE, or Secure Multiparty computation, SMPC, etc.

In step S240, the energy gateways 110-1, ..., 110-N provide their embeddings or the encrypted embeddings to a first output of the respective energy gateway 110-1, ..., 110-N.

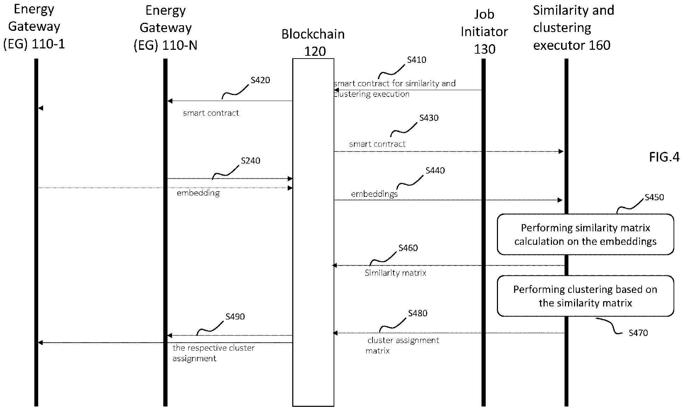

Figure 4 shows an example flow diagram of the clustering of the households according to one example embodiment.

As shown in Figure 4, in step S410, the job initiator 130 may submit a smart contract for similarity and clustering execution to the blockchain 120. The other participants of the energy management system such as the energy gateways 110-1, ..., 110-N, and the similarity and clustering executor 160 may fetch the smart contract from the blockchain 120 as shown in steps S420 and S430.

After the energy gateways 110-1, ..., 110-N upload the respective embeddings to the blockchain 120 in step 240 as explained above, the similarity and clustering executor 160 may fetch the embeddings from the blockchain 120 in step S440.

In step S450, the similarity and clustering executor 160 may perform similarity matrix calculation on the embeddings.

Various method may be implemented to determine a similarity matrix based on the embeddings. In one example, the smart contract includes functions for performing homomorphic operations (dot product, normalization) on the embeddings. It securely calculates the encrypted similarity matrix S using these functions. In further example, the smart contract can be designed to perform calculations in batches or on demand, based on user requests.

In Step S460, the similarity and clustering executor 160 may upload the similarity matrix S to the blockchain 120. Storing the similarity matrix S on the blockchain, ensures permanent and tamper-proof storage.

In Step S470, the similarity and clustering executor 160 may perform clustering based on the similarity matrix S.

Various method may be implemented to cluster the households and determine a cluster assignment matrix. In one example, a dedicated smart contract, or the same contract used for similarity calculation may be used to facilitate secure clustering.

Specifically, the smart contract may implement a privacy-preserving version of the k-means clustering algorithm using homomorphic encryption operations. It iteratively calculates cluster centroids and updates the cluster assignments for each household. Secure aggregation of cluster centroids could involve each site submitting encrypted updates, which the smart contract aggregates using homomorphic operations.

In step S480, the similarity and clustering executor 160 may upload the cluster assignment matrix to the blockchain 120.

As shown in Figure 4, optionally, in step S490, the energy gateways 110-1, 110-N may respectively receive an indication of the cluster to which the household implementing the respective energy gateway 110-1, 110-N is assigned, from the first input of the respective energy gateway 110-1, 110-N.

In the example of Figure 4, the first input and the first output of the respective energy gateway 110-1, 110-N are communicatively connected to the blockchain 120 for the purpose of clustering. Here, the blockchain for the purpose of clustering is same as the one used for training the embedding generation model, as elaborated above with respect to Figure 3. In another example, the first input and the first output may be connected to another blockchain different from the one used to train the embedding generation model or the one used to train the ML model as will be explained later. In yet another example, the first input and the first output may be connected to other entities such as a central server or a decentralized platform for the purpose of clustering.

Implementing the clustering of households using blockchain has the benefits that the blockchain ensures immutability and transparency for all data and computation records, fostering trust among participants. Blockchain eliminates the need for a central server, distributing control and data ownership among the participating sites. All actions and data manipulations are verifiable through blockchain's audit trail, enhancing transparency and accountability. Blockchain can be used to incentivize participation and reward contributions of each site. It also enables reputation systems to track site behavior and trust.

Reference is made back to Figure 2, in step S250, the energy gateways 110-1, ..., 110-N receive, from the first input of the respective energy gateways 110-1, ..., 110-N, information related to a machine learning model for a cluster to which the respective energy gateway 110-1, ..., 110-N is assigned; wherein, the cluster is assigned based on the embedding.

Specifically, the information related to the machine learning model may comprise: an architecture of the machine learning model; initial states of the machine learning model; and hyperparameters of a training process related to the machine learning model.

In step S260, the energy gateways 110-1, 110-N determine a first set of gradients, for example for the model parameters, by training the respective machine learning model based on their own feature vector.

Specifically, the training process at the energy gateway 110-1, ..., 110-N may involve:

> data pre-processing: Preparing the local feature vectors by normalizing, scaling, and encoding it as needed.
> model training: Training the model using the local feature vectors. The model weights are updated based on the local feature vectors and a first set of gradients are computed.
> model evaluation: Evaluating the trained model to monitor performance and ensure the model is learning appropriately.

Optionally, to preserve privacy, the first set of gradients may be encrypted before being provided to the respective output. The encrypting may be performed using Homomorphic Encryption, HE, or Secure Multiparty computation, SMPC, etc.

In one example, the encrypted first set of gradients may be securely transmitted to the blockchain using smart contracts.

In Step S270, the energy gateways 110-1, ..., 110-N may respectively provide their first set of gradients or the encrypted first set of gradients to the first output of the respective energy gateway 110-1, ..., 110-N.

A skilled person should understand, the steps from S250-S270 may be repeated with more iterations until the updated machine learning model converge. In one example, the training may be completed when a predetermined performance is achieved. In another example, the training may be completed after a predefined number of iterations.

After the training is completed, in step S280, the energy gateways 110-1, ..., 110-N may respectively receive, from the first input of the respective energy gateways 110-1, ..., 110-N, a trained machine learning model, wherein, the trained machine learning model is trained base on the first set of gradients.

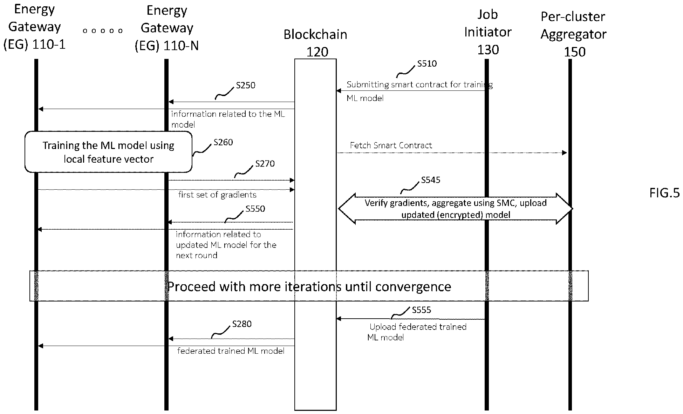

Figure 5 shows an example flow diagram of the federated training of the machine learning model according to one example.

The federated training of the machine learning model is similar as the federated training of embedding generation model as described above with respect to Figure 3, and similar steps will not be repeated here for simplicity.

Specifically, In the example of Figure 5, the base model may be initialized by the job initiator 130. In another example, the base model may be agreed upon by all gateways in the cluster. This model can be a simple ML model or a deep learning (DL) model depending on the application (e.g., PV production prediction, NILM).

Specifically, the verifier 140 (not shown in Figure 5) may verify the first set of gradients received from each household. This may include checks for: validity and format of the first set of gradients, consistency with the model parameters and training algorithm, and thresholding to identify potential rogue clients submitting invalid or malicious updates.

The aggregator 150 may be configured to aggregate first set of gradients from the clients in each cluster, and thus named as per-cluster aggregator here in Figure 5. It may perform secure aggregation of these encrypted first set of gradients to update the global model.

$$\text{Global Gradient} = \frac{1}{N} \sum_{i=1}^{N} \text{Enc}(\nabla_i)$$

where (N) is the number of gateways, and $\nabla_i$ represents the first set of gradients from gateway (i).

Alternatively, the gateways 110-1, ..., 110-N can use a decentralized aggregation approach where each gateway aggregates the encrypted first set of gradients locally before sharing the aggregated result with the blockchain. This further reduces the risk of exposing individual first set of gradients.

The aggregated first set of gradients are used to update the global model parameters. The updated model may be then recorded on the blockchain in step S545.

The updated global model may be distributed back to all clients in the cluster via the blockchain. Each client in the cluster retrieves the updated model for that cluster and replaces its local model with the updated global model in step S550.

In one example, the gateway 110-1, ..., 110-N may send a message to the first output or the second output of the apparatus to indicate a deviation of the embedding generation model or the machine learning model is higher than a predetermined threshold. Specifically, the deviation may be related to an evaluation metric.

The evaluator 170 on the blockchain may aggregate the evaluation metrics from all gateways in the same cluster to assess the overall performance of the global model. This helps in identifying any potential issues and ensuring that the model is performing well across all clients.

A retraining of the respective model may be initiated for example when the aggregate of the evaluation metrics is above a predetermined threshold.

Reference is made back to Figure 2, in step S290, the energy gateways 110-1, ..., 110-N may respectively predict, using the trained machine learning model, at least one of: the energy generation, energy consumption, and energy surplus; or disaggregating, using the trained machine learning model, an overall consumption to individual consumptions of a plurality of energy consuming entities within the respective household.

The ML model may be used for various purposes. The information comprised in the feature vector may vary based on the usage of the ML model.

Specifically, in one example, the ML model may be the Non-Intrusive Load Monitoring (NILM) model, the features and feature vectors would be centered around the characteristics of the electrical load data and the types of appliances within the households.

Each gateway (client) at respective household collects and preprocesses data related to their energy consumption patterns, weather, appliance information etc.

For NILM, the features vector may comprise at least one of the following information:

Electrical Load Characteristics:

Power Consumption Patterns: Historic data of power consumption,
including average, peak, and minimum power usage.
Voltage and Current: Historic data of voltage and current measurements.
Harmonics: Harmonic content of the electrical signals.
Power Factor: Ratio of real power to apparent power, indicating the efficiency of power usage.

Appliance Characteristics:

Appliance Type: Categorical encoding of appliance types (e.g., HVAC, dishwasher, refrigerator, washing machine, dryer).
Usage Frequency: Frequency of appliance usage (e.g., number of cycles per day).
Operational Patterns: Time of day and duration of appliance operation (e.g., morning, evening, continuous).

Temporal Features:

Time of Day: Time when the appliance is used (e.g., hour of the day).
Day of Week: Day of the week when the appliance is used.
Seasonal Patterns: Seasonal variations in appliance usage (e.g., summer vs. winter).

Environmental Factors:

Temperature: Ambient temperature, as it can affect the usage of certain appliances (e.g., HVAC).
Humidity: Ambient humidity levels, relevant for appliances like dehumidifiers and HVAC systems.

Occupancy Data: Presence or absence of people in the household, affecting appliance usage patterns.

Historical Data:

Previous Usage Data: Historical power consumption statistics for individual appliances.
Anomalies: Instances of unusual power consumption patterns.

Electrical Signature Features:

Transient Events: Characteristics of electrical transients when appliances are turned on or off.
Steady-State Features: Steady-state power consumption of appliances during operation.

In another example, the ML model may be used for aggregate load forecasting involving predicting the total electricity consumption for a group of households or an entire region. This task requires a comprehensive set of features that capture various aspects of electricity usage patterns, environmental conditions, and temporal factors.

Each gateway (client) at respective household collects and preprocesses data related to their energy consumption patterns, weather, etc.

Specifically, for aggregate load forecasting model, the features vector may comprise at least one of the following information:

Historic Load Statistics:

Historical total load consumption data.
Measures of variability in load (e.g., standard deviation, variance).

Weather and Environmental Statistics (min, max, avg for each of the 12 months):

Temperature
Humidity
Wind Speed
Solar Irradiance: Amount of solar radiation, impacting both solar generation and cooling load.
Precipitation: Rainfall or snowfall, which can affect heating and lighting loads.

Socio-Economic Factors:

Population Density: Number of people in the area.
Economic Activity: Economic indicators like GDP or industrial activity.

Building and Infrastructure Characteristics:

Building Types: Proportion of residential, commercial, and industrial buildings.
Heating/Cooling Systems: Types of heating and cooling systems in use (e.g., electric, gas, HVAC).

Grid Operational Data:

Grid Demand: Current and historical grid demand.
Demand Response Events: Records of demand response events that have occurred.
Energy Prices: Historic energy prices.

In another example, the ML model may be the PV Generation Forecasting Model.

Each gateway (client) at respective household collects and preprocesses data related to their solar energy generation system and energy consumption patterns.

Specifically, for PV Generation Forecasting model, the features vector may comprise at least one of the following information:

Historical PV production data: This is a time series of energy generated by the photovoltaic (PV) panels, typically measured in kilowatt-hours (kWh) or watt-hours (Wh) over specific intervals (e.g., hourly, daily). This could also include aggregate statistics such as minimum, maximum, and average of the energy produced per day, per week, per month, etc. during each of the 12 months of the year.

Solar panel specifications:

Panel type: This could include monocrystalline, polycrystalline, or thin-film technologies.
Panel efficiency: This refers to the panel's ability to convert sunlight into electricity.
Panel area: The total area of the solar panels installed.
Number of panels: The total count of solar panels in the system.

Panel orientation and tilt angles:

Azimuth angle: The angle of the panels relative to true north (e.g., 180° facing south).
Tilt angle: The angle of the panels relative to the horizontal plane (e.g., 30° tilted).
Description: These parameters affect the amount of sunlight captured by the panels throughout the year.

Reference is made back to Figure 2, the energy gateways 110-1, ..., 110-N provide a result of the predicting or the disaggregating to a second output of the respective energy gateways 110-1, ..., 110-N.

In one example, the second output may be a display connected to the energy gateway, so that the owner of the household may obtain the information of the prediction or the disaggregating.

In one example, by providing household owners with detailed insights into their energy consumption patterns and future predictions, the system empowers them to make more informed decisions about when to trade energy. For example, if a household knows it will generate excess solar energy in the coming days, they can choose to sell the surplus on a decentralized energy market at optimal times. In another example, disaggregated data gives users a clear breakdown of energy usage, allowing them to optimize their energy consumption or storage. Households can sell excess energy back to the grid or directly to other consumers in the decentralized market during peak demand periods when prices are higher.

Without in any way limiting the scope, interpretation, or application of the claims appearing below, a technical effect of one or more of the example embodiments disclosed herein is that Federated learning is used improve the machine learning model used for predicting the energy production, energy consumption, or energy surplus; or for disaggregating an overall load to individual loads of a plurality of energy consuming entities within the household. Meanwhile, non-IID Distributed characteristics of the data across clients is addressed by clustering.

The use of homomorphic encryption and blockchain ensures that raw data is never shared, significantly enhancing privacy. Federated learning within clusters of similar clients leads to better model performance due to homogeneous data distributions. Clustering clients makes the federated learning process more scalable by reducing the number of clients participating in each learning round. The iterative process of training, sharing, and updating creates a robust global model that generalizes well across different clients. Blockchain provides a transparent and verifiable record of all transactions, building trust among clients and encouraging participation. By decentralizing the learning process, the system becomes more resilient to failures and attacks, enhancing overall security. The use of blockchain ensures accountability as all actions are recorded and can be audited, ensuring compliance with data handling policies.

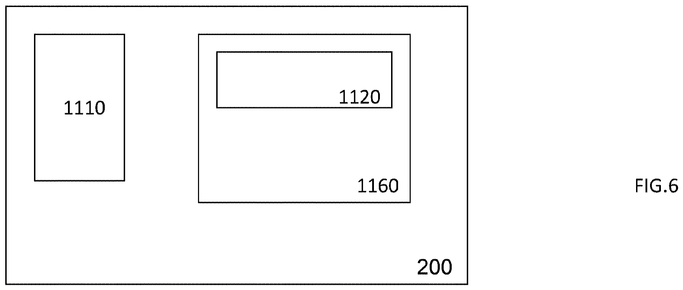

Figure 6 is a block diagram depicting an apparatus 200 operating in accordance with an example embodiment. The apparatus 200 may be, for example, an electronic device such as a chip, chip-set, an electronic device or an access network controller. The apparatus 200 includes a processor 1110 and a memory 1160. In other examples, the apparatus 200 may comprise multiple processors.

In the example of Figure 6, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 200 as explained above. In other examples, the apparatus 200 may comprise more than one memory 1160 or different kinds of storage devices.

Computer program instructions 1120 for enabling implementations of example embodiments of the invention or a part of such computer program instructions may be loaded onto the apparatus 200 by the manufacturer of the apparatus 200, by a user of the apparatus 200, or by the apparatus 200 itself based on a download program, or the instructions can be pushed to the apparatus 200 by an external device. The computer program instructions may arrive at the apparatus 200 via an electromagnetic carrier signal or be copied from a physical entity such as a computer program product, a memory device or a record medium such as a Compact Disc (CD), a Compact Disc Read- Only Memory (CD-ROM), a Digital Versatile Disk (DVD) or a Blu-ray disk.

According to an example embodiment, the apparatus 200 comprises means, wherein the means comprises at least one processor 1110, at least one memory 1160 including computer program code 1120, the at least one memory 1160 and the computer program code 1120 configured to, with the at least one processor 1110, cause the performance of the apparatus 200.

A skilled person shall understand that the sequence of the method is not limited to the illustrated example. The method may be implemented in other sequence.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in Figure 11. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

**Claims**

1. An apparatus (200), comprising means for:

  - obtaining data from a smart energy sensor connected to at least one of: an energy generating device, an energy consuming entity; and an energy storage device within a household;
  - determining a feature vector based on the obtained data, wherein, the feature vector comprises information related to at least one of: energy generation, energy consumption, energy surplus at the household;
  - determining an embedding based on the feature vector, wherein the embedding is suitable for a comparison across a plurality of households for clustering the households;
  - providing the embedding to a first output of the apparatus;
  - receiving, from a first input of the apparatus, information related to a machine learning model for a cluster to which the apparatus is assigned; wherein, the cluster is assigned based on the embedding;
  - determining a first set of gradients by training the machine learning model based on the feature vector;
  - providing the first set of gradients to the first output of the apparatus;
  - receiving, from the first input of the apparatus, a trained machine learning model, wherein, the trained machine learning model is trained base on the first set of gradients;
  - predicting, using the trained machine learning model, at least one of: the energy generation, energy consumption, and energy surplus; or disaggregating, using the trained machine learning model, an overall consumption to individual consumptions of a plurality of energy consuming entities within the household;
- providing a result of the predicting or the disaggregating to a second output of the apparatus.

2. The apparatus (200) according to claim 1, wherein the first input and the first output of the apparatus are communicatively connected to a blockchain.

3. The apparatus (200) according to any preceding claim, wherein the means are further configured for:

- obtaining a federated trained embedding generation model;
- determining the embedding based on the feature vector using the federated trained embedding generation model.

4. The apparatus (200) according to claim 3, wherein the means are further configured for:

- receiving information related to an embedding generation model from a second input of the apparatus (200);
- determining a second set of gradients by training the embedding generation model using the feature vector;
- providing the second set of gradients to a third output of the apparatus;
- receiving the federated trained embedding generation model from the second input of the apparatus.

5. The apparatus (200) according to claim 4, wherein, the second input and the third output of the apparatus are communicatively connected to the blockchain or a further blockchain.

6. The apparatus (200) according to the any preceding claim, wherein the information related to the machine learning model or the information related to the embedding generation model comprises:

- an architecture of the respective model;
- initial states of the respective model; and
- hyperparameters of a training process related to the respective model.

7. The apparatus (200) according to any preceding claim, wherein the means are further configured for:

- storing the data from smart energy sensor;
- determining at least one of statistics of historic consumption; statistics of historic energy production, and statistics of historic energy storage based on the stored data;
- determining the feature vector based on the statistics.

8. The apparatus (200) according to any preceding claim, wherein the means are further configured for:

- obtaining at least one of:

characteristics of the energy generating device;
characteristics of the energy consuming entities;
data from an energy metering device within the household;
information about the household and/or building of the household;
information about environment; and
temporal information.

9. The apparatus (200) according to any preceding claim, wherein the means are further configured for:

- determining the feature vector further based on at least one of:

characteristics of the energy generating device;
characteristics of the energy consuming entities;
data from an energy metering device within the household;
information about the household and/or building of the household;
information about environment; and
temporal information.

10. The apparatus (200) according to any preceding claim, wherein the means are further configured for:

- receiving an indication of the cluster to which the apparatus is assigned from the first input of the apparatus.

11. The apparatus (200) according to any preceding claim, wherein the means are further configured for:

- sending a message to the first output or the second output of the apparatus to indicate a deviation of the embedding generation model or the machine learning model is higher than a predetermined threshold.

12. The apparatus (200) according to any preceding claim, wherein the means are further configured for:

- encrypting at least one of:

- the embedding,
- the first set of gradients, and
- the second set of gradients,

before providing it to the respective output of the apparatus.

13. The apparatus (200) according to claim 12, wherein the encrypting is performed using Homomorphic Encryption, HE, or Secure Multiparty computation, SMPC.

14. The apparatus (200) according to any preceding claim, wherein the apparatus is suitable for use by an energy gateway.

15. A computer-implemented method performed by an apparatus, comprising:

- obtaining data from a smart energy sensor connected to at least one of: an energy generating device, an energy consuming entity; and an energy storage device within a household;
- determining a feature vector based on the obtained data, wherein, the feature vector comprises information related to at least one of: energy generation, energy consumption, energy surplus at the household;
- determining an embedding based on the feature vector, wherein the embedding is suitable for a comparison across a plurality of households for clustering the households;
- providing the embedding to a first output of the apparatus;
- receiving, from a first input of the apparatus, information related to a machine learning model for a cluster to which the apparatus is assigned; wherein, the cluster is assigned based on the embedding;
- determining a first set of gradients by training the machine learning model based on the feature vector;
- providing the first set of gradients to the first output of the apparatus;
- receiving, from the first input of the apparatus, a trained machine learning model, wherein, the trained machine learning model is trained base on the first set of gradients;
- predicting, using the trained machine learning model, at least one of: the energy generation, energy consumption, and energy surplus; or disaggregating, using the trained machine learning model, an overall consumption to individual consumptions of a plurality of energy consuming entities within the household;
- providing a result of the predicting or the disaggregating to a second output of the apparatus.

100

| Energy Gateway (EG) 110-1 | | Job Initiator 130 | similarity and clustering executor 160 | Evaluator 170 |

Blockchain 120

| Energy Gateway (EG) 110-N | | Verifier 140 | Aggregator 150 |

FIG.1

**EP 4 723 022 A1**

FIG.2

15

FIG.3

EP 4 723 022 A1

FIG.4

Energy Gateway (EG) 110-1 · Energy Gateway (EG) 110-N · Blockchain 120 · Job Initiator 130 · Similarity and clustering executor 160

S410 smart contract for similarity and clustering execution

S420 smart contract

S430 smart contract

S240 embedding

S440 embeddings

S450 Performing similarity matrix calculation on the embeddings

S460 Similarity matrix

Performing clustering based on the similarity matrix

S490 the respective cluster assignment

S480 cluster assignment matrix

S470

Energy
Gateway
(EG) 110-1 ∘ ∘ ∘ ∘ ∘

Energy
Gateway
(EG) 110-N

Blockchain
120

Job
Initiator
130

Per-cluster
Aggregator
150

S510

Submitting smart contract for training
ML model

S250

information related to the ML
model

S260

Training the ML model using
local feature vector

Fetch Smart Contract

S270

first set of gradients

S545

Verify gradients, aggregate using SMC, upload
updated (encrypted) model

S550

information related to
updated ML model for the
next round

Proceed with more iterations until convergence

S555

Upload federated trained
ML model

S280

federated trained ML model

FIG.5

FIG.6

Europäisches
Patentamt
European
Patent Office
Office européen
des brevets

# EUROPEAN SEARCH REPORT

**Application Number**

EP 25 20 3668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/244963 A1 (MIMAROGLU SELIM [US] ET AL) 3 August 2023 (2023-08-03)<br>* paragraph [0002] *<br>* paragraph [0004] *<br>* paragraph [0019] - paragraph [0021] *<br>* paragraph [0031] - paragraph [0033] *<br>* paragraph [0035] - paragraph [0036] *<br>* paragraph [0046] - paragraph [0047] *<br>* paragraph [0062] *<br>* paragraph [0067] - paragraph [0068] *<br>* paragraph [0071] - paragraph [0072] *<br>* paragraph [0083] - paragraph [0087] *<br>* paragraph [0112] - paragraph [0118] *<br>* paragraph [0141] *<br>* figures 1,3 *<br>* table 1 *<br>----- | 1-15 | INV.<br>G06Q50/06<br>G06N20/00<br>H02J3/00<br>H04L9/00 |
| X | US 2024/014655 A1 (KIM JAEHONG [KR]) 11 January 2024 (2024-01-11)<br>* paragraph [0002] - paragraph [0013] *<br>* paragraph [0070] - paragraph [0092] *<br>* figures 3-5 *<br>* claims 1-2 *<br>----- | 1-15 | |
| | | | TECHNICAL FIELDS SEARCHED (IPC) |
| | | | G06Q<br>G06E<br>H04L<br>H02J<br>G06N |

The present search report has been drawn up for all claims

| Place of search | Date of completion of the search | Examiner |
|---|---|---|
| Munich | 19 February 2026 | Härdeman, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 20 3668

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2026

| Patent document cited in search report | | Publication date | Patent family member(s) | | Publication date |
|---|---|---|---|---|---|
| US 2023244963 | A1 | 03-08-2023 | CN | 113557537 A | 26-10-2021 |
| | | | JP | 7395605 B2 | 11-12-2023 |
| | | | JP | 7685035 B2 | 28-05-2025 |
| | | | JP | 2022547758 A | 16-11-2022 |
| | | | JP | 2024023443 A | 21-02-2024 |
| | | | US | 2021158186 A1 | 27-05-2021 |
| | | | US | 2023244963 A1 | 03-08-2023 |
| | | | WO | 2021108011 A1 | 03-06-2021 |
| US 2024014655 | A1 | 11-01-2024 | US | 2024014655 A1 | 11-01-2024 |
| | | | WO | 2024010122 A1 | 11-01-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202011009703 A